# EUROPÄISCHE PATENTSCHRIFT

(11) **EP 0 407 756 B1**
(45) Veröffentlichungstag und Bekanntmachung des Hinweises auf die Patenterteilung: **20.01.1993**
(21) Anmeldenummer: 90111279.7
(22) Anmeldetag: 15.06.1990
(51) Int. Cl.: B29C 47/56, B29C 47/12, B29C 47/06

(54) **Strangpresskopf**
Extruder head
Tête d'extrusion

(30) Priorität: 14.07.1989 DE 3923290
(43) Veröffentlichungstag der Anmeldung: 16.01.1991
(73) Patentinhaber: PAUL TROESTER MASCHINENFABRIK, D-30519 Hannover (DE)
(72) Erfinder: Gohlisch, Hans-Joachim, Dipl.-Ing., D-3000 Hannover 81 (DE); Baumgarten, Wilfried, Dipl.-Ing., D-3017 Pattensen (DE); Becker, Klaus, D-3226 Sibesse (DE); Budiman, Paul, Dipl.-Ing., D-3000 Hannover 61 (DE)
(74) Vertreter: Junius, Walther, Dr.

(56) Entgegenhaltungen:
- EP-A- 0 165 412
- EP-A- 0 270 816
- US-A- 4 652 410

## Beschreibung

Die Erfindung betrifft einen Strangpreßkopf zur Herstellung von Profilen aus verschiedenartigen Kautschuk- und/oder Kunststoffmischungen, die aus mehreren Extrudern ausgepreßt werden, bestehend aus einem fest mit den Zylindern der Extruder verbundenen Hauptteil und mindestens einem beweglichen Hauptteil mit einer zwischen ihnen liegenden ebenen oder stumpfwinkligen Teilungsfläche, bei dem ein Strömungskanal diese Teilungsfläche durchsetzt und mindestens ein Stück eines anderen Strömungskanales an bzw. in dieser Teilungsfläche liegt, und aus einer Vorrichtung zur Erzeugung der die Hauptteile zusammenpressenden Schließkraft sowie einer Verriegelungsvorrichtung zum Zusammenhalten des bzw. der beweglichen Hauptteile mit dem festen Hauptteil.

Ein derartiger Strangpreßkopf ist aus der DE-PS 34 27 022 bekannt geworden. Dieser Strangpreßkopf zeichnet sich besonders durch seine niedrigen Herstellungskosten und die kurzen, einfach geformten Fließwege von den Schneckenspitzen bis zur Fertigprofilleiste aus. Die niedrigen Herstellungskosten beruhen auf der einfachen Herstellungsmöglichkeit der ebenen Teilungsfläche zwischen dem bzw. den beweglichen Hauptteilen und dem festen Hauptteil dieses Strangpreßkopfes. Aber auch die Handhabung und die Reinigung sind durch diese Bauart mit ebenen Teilungsflächen wesentlich erleichtert. Die Stillstandszeiten sind hierdurch deutlich vermindert.

Das Abdichten der Extrusionsleisten vor dem Austritt aus dem Spritzkopf, die zwischen den angeklappten Kopfvorderteilen liegen, ist bei dieser bekannten Ausführungsform des Strangpreßkopfes problematisch, wenn mit sehr hohen Massedrucken gearbeitet wird, wie dieses beispielsweise der Fall ist, wenn im Extruder erhebliche Aufschließarbeit zu leisten ist. Die hier auftretenden Probleme wurden noch dadurch vergrößert, daß die zum Schwenken vorgesehenen Hydraulikzylinder, die gleichzeitig die Anpreßkräfte für die beweglichen Kopfteile aufzubringen haben, bei sehr großen Massedrucken im Inneren der Extrusionsanlage und bei nicht genügend großer Dimensionierung ebenfalls Ursache von Undichtigkeiten werden können.

Aus der DE-OS 22 36 363 ist es bekannt geworden, bei einem Breitspritzkopf den beweglichen Teil und den verschwenkbaren Teil miteinander durch verschwenkbare Klammern zu ,verbinden, welche durch Hydraulik-Kolben-Zylinder-Einheiten in ihren Klammersitz gepreßt werden. Derartige Klammern vermögen erheblich größere Kräfte aufzufangen als die zu ihrer Bewegung dienenden Hydraulik-Kolben-Zylinder-Einheiten. Durch ihre Anwendung läßt sich jedoch das Problem einer ausreichenden Abdichtung der Extrusionsleisten nicht bei dieser Bauform lösen.

Die Erfindung vermeidet die Nachteile des Standes der Technik. Es ist die Aufgabe der Erfindung, den Strangpreßkopf mit einfachen Mitteln und unter Vermeidung überdimensionierter Kraftelemente abzudichten und darüber hinaus eine wirksame Abdichtung der Extrusionsleisten zu erreichen. Auch sollen die Extrusionsleisten auswechselbar sein, ohne den Strangpreßkopf insgesamt öffnen und reinigen zu müssen.

Die Erfindung besteht darin, daß die Vorrichtung (12) zur Erzeugung der Schließkraft am festen Hauptteil (1) angeordnet ist und eine am beweglichen Hauptteil (4) angreifende Kraftkomponente erzeugt, welche parallel zur Teilungsebene (6) verläuft, und daß die Verriegelungsvorrichtungen keilförmig gestaltete Klammern (15,27) sind.

Hierdurch wird erreicht, daß alle Teile des Strangpreßkopfes einwandfrei abgedichtet sind, einschließlich der Extrusionsleiste. Die hierzu angewandten Mittel sind baulich einfach und auch einfach zu handhaben. Die Abdichtung ist auch bei höchstem Massedruck einwandfrei. Die Vorteile des eingangs genannten Strangpreßkopfes nach DE 34 27 022 bleiben dabei erhalten.

Vorteilhaft ist es, wenn hydraulische Servomotoren, vorzugsweise Kolben-Zylinder-Einheiten, zur Erzeugung der am beweglichen Hauptteil angreifenden, parallel zur Teilungsebene verlaufenden Kraftkomponenten am festen Hauptteil angeordnet sind. Hydraulische Servomotore bringen leicht die erforderlichen Kräfte auf, um die Teile des Strangpreßkopfest fest aneinander zu drücken.

Bei einer Ausführungsform der Erfindung ist die Gestaltung so vorgenommen, daß das Gelenk des beweglichen Hauptteilles ausreichend spiel für eine Verschiebung des beweglichen Hauptteiles entlang der Teilungsfläche aufweist. Diese Bauart zeichnet sich durch hohe Einfachheit aus, da die Bolzen-/Bohrungs-Toleranzen grob gehalten werden können, führt diese Bauart zu einer verbilligten Herstellungsweise.

Eine andere Möglichkeit der Ausführung besteht darin, daß das bewegliche Hauptteil aus zwei Teilen besteht, die durch parallel zur Teilungsebene verlaufende Führungen miteinander verbunden sind. Diese Ausführungsform ist zwar teurer, zeichnet sich aber durch erheblich höhere Genauigkeit aus.

Eine Möglichkeit der Klammerung besteht darin, daß die keilförmigen Klammern in Führungen verschiebbar sind und an der Außenfläche des beweglichen Hauptteiles angreifen.

Eine andere Möglichkeit der Klammerung besteht darin, daß das feststehende und das bewegliche Hauptteil an den Seiten Vorsprünge tragen, die von der keilförmigen Klammer überfaßt werden.

Eine Möglichkeit, um die Kraftkomponente in Richtung der Teilungsebene gleichzeitig mit dem Verklammern zu erzielen, besteht darin, daß die keilförmige Klammer eine im Querschnitt schwalbenschwanzförmige Ausnehmung aufweist und die Vorsprünge den Querschnitt von halben Schwalbenschwänzen aufweisen. Bei dieser Ausführungsform der Klammer, aber auch anderen Ausführungsformen, kann eine baulich einfache Lösung dadurch erzielt werden, daß die Klammer um eine Drehachse schwenkbar und längs dieser verschiebbar ist.

Vorteilhaft für die Verarbeitung verschiedenster Materialien zu verschiedensten Profilen ist es, wenn das bewegliche Teil mit einer das Strömungsprofil aufweisenden Einsatzplatte versehen ist, an der die parallel zur Teilungsebene verlaufende Kraftkomponente angreift.

Besonders einfach wird die Abdichtung dann, wenn an der Einsatzplatte eine Hälfte der Vorprofilleiste befestigt ist.

Das Wesen der Erfindung ist nachstehend anhand von in der Zeichnung schematisch dargestellten Ausführungsbeispielen näher erläutert.

Es zeigen:
Fig. 1 einen Längsschnitt durch einen Strangpreßkopf für eine mit zwei Extrudern ausgerüstete Extrusionsanlage,
Fig. 2 eine Seitenansicht dieses Strangpreßkopfes im geschlossenen Zustand,
Fig. 3 eine Seitenansicht dieses Strangpreßkopfes in geöffnetem Zustand,
Fig. 4 eine Ansicht von vorne,
Fig. 5 einen Schnitt durch die Klammer und die an Hauptteilen des Strangpreßkopfes angeformten Vorsprünge,
Fig. 6 einen Längsschnitt durch einen Strangpreßkopf für eine mit drei Extrudern ausgerüstete Extrusionsanlage,
Fig. 7 einen Schnitt längs der Ebene A-A,
Fig. 8 einen Schnitt längs der Linie B-B,
Fig. 9 eine Ansicht dieses Extruders von vorne in geschlossenem Zustand,
Fig. 10 einen Schnitt durch einen ähnlichen Strangpreßkopf mit den strömungskanalformenden Einsätzen.

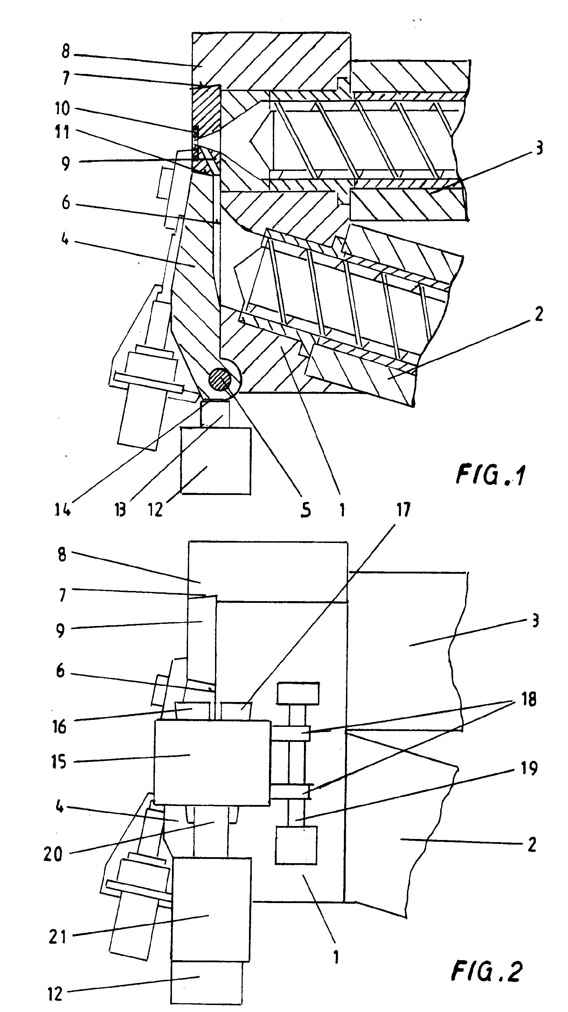

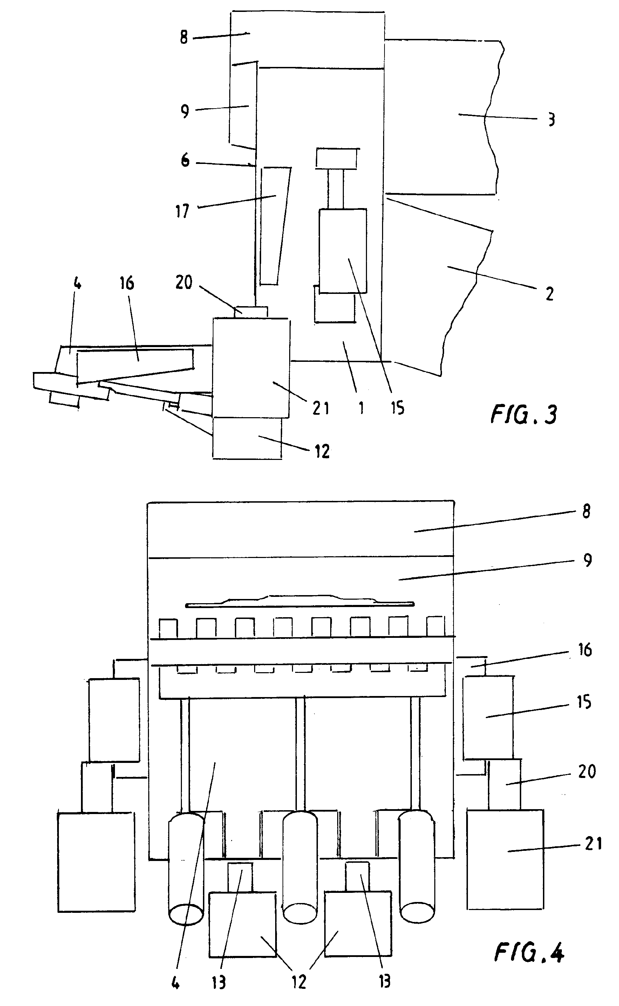

Der Strangpreßkopf der Fig. 1 bis 5 besteht aus einem feststehenden Hauptteil 1, an welchem die Extruder 2, 3 fest angeflanscht sind, und einem beweglichen Hauptteil 4, welcher um die Welle 5 verschwenkbar ist. Der Verschwenkung dienen nicht dargestellte Servomotoren, vorzugsweise in Form von hydraulischen Kolben-Zylinder-Einheiten oder hydraulischen Drehantrieben. Die Teilungsfläche 6 zwischen dem feststehenden Hauptteil 1 und dem beweglichen Hauptteil 4 ist eine Ebene. Das feststehende Hauptteil 1 weist auf der der Welle 5 abgewandten Seite eine vorzugsweise senkrecht zur Teilungsebene 6 angeordnete Widerlagerfläche 7 an einem Vorsprung 8 auf, an der die Vorprofilleiste 9 montiert ist, die die Extrusionsleiste 10 aufnimmt. Die Vorprofilleiste 9 liegt mit ihrer einen Seitenfläche an der Widerlagerfläche 7 an, mit der gegenüberliegenden Seitenfläche liegt sie an der Stirnseite 11 des beweglichen Hauptteiles 4 an. Unterhalb des beweglichen Hauptteiles 4 ist eine hydraulische Kolben-Zylinder-Einheit 12 angeordnet, deren Kolbenstange 13 so weit vorschiebbar ist, daß sie an der Druckfläche 14 des beweglichen Hauptteiles 4 bei Druckbeaufschlagung anliegt und das bewegliche Hauptteil 4 mit einer Kraft parallel zur Teilungsfläche 6 beaufschlagt, die die Stirnseite 11 gegen die Vorprofilleiste 9 und diese gegen die Widerlagerfläche 7 preßt. Dieses ist dadurch ermöglicht, daß in dem durch die Welle 5 gebildeteten Gelenk ausreichend Spiel ist, um diese die Abdichtung der Vorprofilleiste bewirkende Verschiebung und Pressung durchführen zu können.

Das bewegliche Hauptteil 4 wird an dem feststehenden Hauptteil 1 durch Klammern 15 gehalten. Diese Klammern umgreifen an den Seiten des beweglichen Hauptteiles befindliche Vorsprünge 16 und am feststehenden Hauptteil 1 befindliche Vorsprünge 17. Diese Vorsprünge weisen voneinander einen gewissen Abstand auf. Sowohl die Vorsprünge 16, 17 als auch die an ihnen anliegenden Flächen der Klammern 15 sind zueinander schräg in Keilform angeordnet, derart, daß die Anlageflächen zwischen den Vorsprüngen 16, 17 und der Klammer 15 parallel zueinander angeordnet sind. Die Klammern 15 weisen Gelenkteile 18 bildende Ansätze auf, die eine Achse 19 umfassen. Diese Achse 19 ist so lang ausgebildet, daß eine Verschiebung des Gelenkteiles 18 längs der Achse 19 möglich ist. In ihren Klemmsitz werden die Klammern 15 durch den Preßkolben 20 des hydraulischen Servomotors (Hydraulik-Kolben-Zylinder-Einheit) 21 gepreßt, bei geeigneter Ankopplung. dieses Preßkolbens 20 an die Klammer 15 kann der gleiche Servomotor 21 auch zur Lösung der Klammer 15 dienen.

Zweckmäßigerweise weist die die Vorsprünge 16, 17 umgreifende Ausnehmung 22 der Klammer 15 im Querschnitt eine Schwalbenschwanzform auf, während die Vorsprünge 16, 17 jeweils den Querschnitt einer halben Schwalbenschwanzform aufweisen.

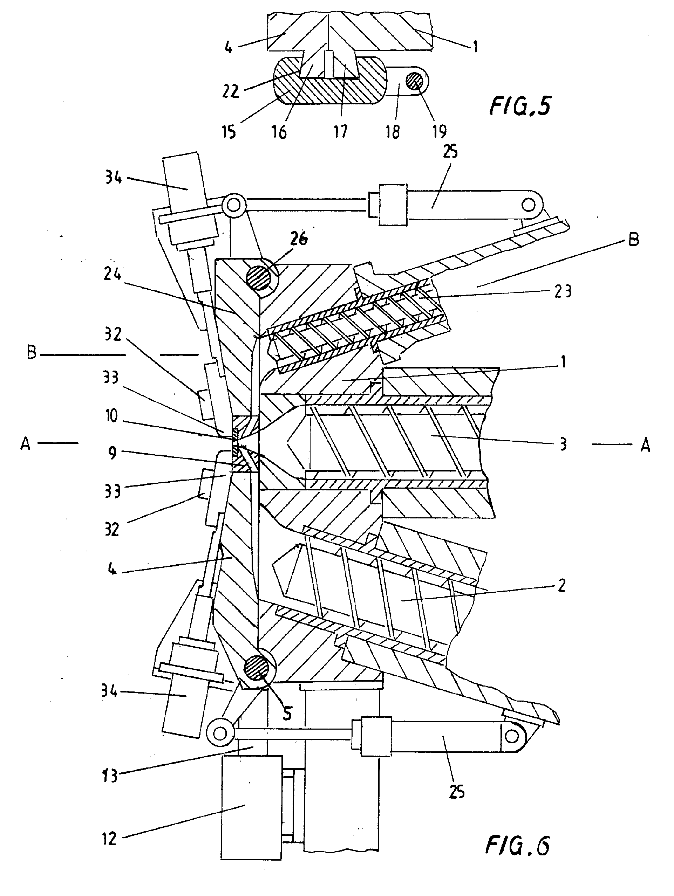

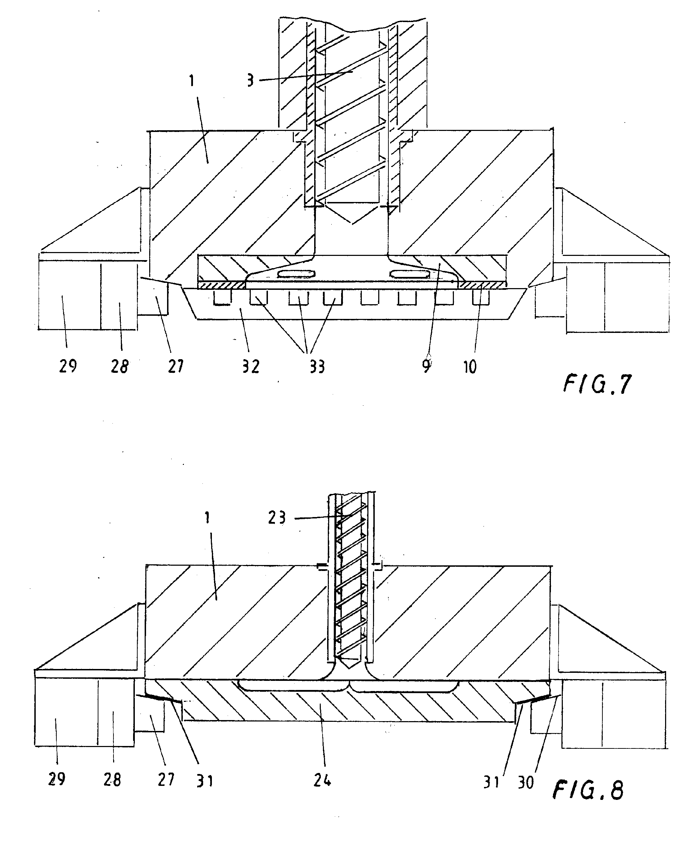

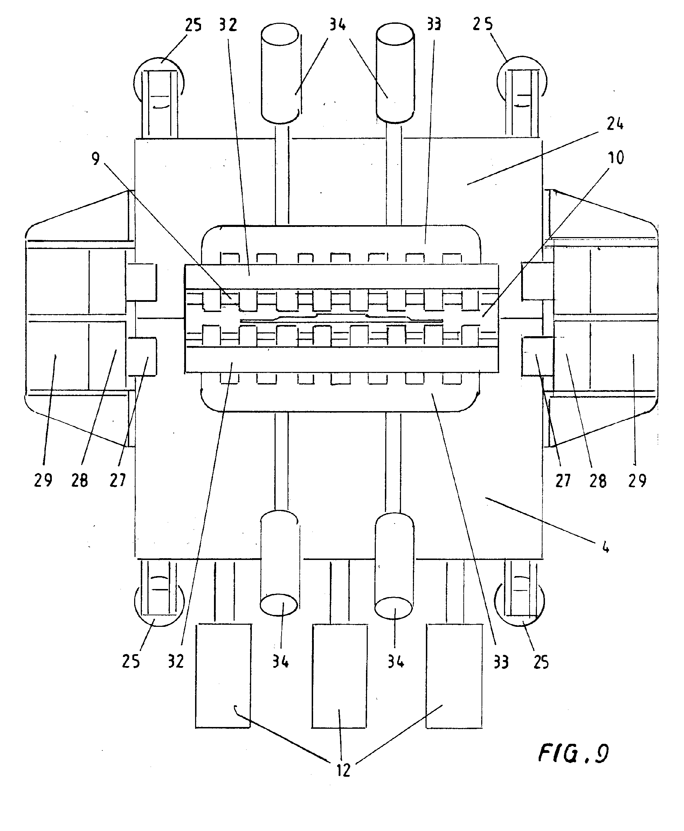

Im Ausführungsbeispiel der Fig. 6 bis 10 weist die Extrusionsanlage drei Extruder 2,3,23 auf. Diese drei Extruder 2,3,23 sind an das feststehende Hauptteil 1 des Strangpreßkopfes fest angeflanscht. Dieser Strangpreßkopf weist zwei bewegliche Hauptteile 4, 24 auf, die zwischen sich die Vorprofilleiste 9 klemmen. Der Verschwenkung dieser beiden beweglichen Hauptteile 4, 24 dienen hydraulische Servomotore 25. Das obere bewegliche Hauptteil 24 ist mittels der Welle 26 am feststehenden Hauptteil 1 angebracht. Dieses Gelenk mit der Welle 26 weist ein äußerst geringes Spiel auf, während die Welle 5, mit der das bewegliche Hauptteil 4 gelenkig mit dem feststehenden Hauptteil 1 verbunden ist, ein relativ großes Spiel aufweist, damit der Servomotor 12 das bewegliche Hauptteil 4 mit seiner Stirnseite gegen die Vorprofilleiste 9 und diese gegen die Stirnseite des beweglichen Hauptteiles 24 pressen kann. Die beweglichen Hauptteile 4, 24 werden an die Teilungsebene 6 des feststehenden Hauptteiles 1 mittels Klammern in Form von Schiebern 27 gedrückt, die in Halterungen bzw. Führungen 28 durch hydraulische Servomotore 29 verschiebbar sind und mit ihrer Keilfläche 30 an einer ihnen zugeordneten parallelen Keilfläche 31 an der Außenseite der beweglichen Hauptteile 4, 24 unter erheblichem Preßdruck anliegen.

Die Extrusionsleiste 10 wird zusammen mit der Vorprofilleiste 9 in Richtung senkrecht zur Teilungsebene durch in Führungen 32 laufende Schieber 33 geklemmt, die durch Servomotore 34 verschiebbar sind.

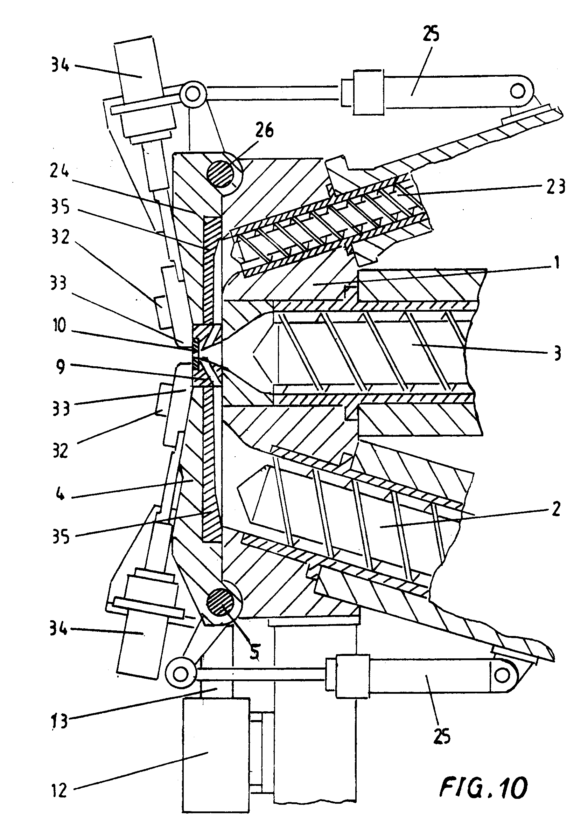

Im Ausführungsbeispiel der Fig. 10 sind in den beweglichen Hauptteilen 4, 24 Ausnehmungen für einzulegende Platten 35 vorgesehen, in welche die Strömungskanäle eingearbeitet sind. Diese Platten 35 können an Vorprofilleistenhälften 9 angebracht sein oder einstückig mit diesen hergestellt sein. Die Vorrichtung zur Erzeugung einer parallel zur Teilungsebene 6 verlaufenden Kraftkomponente kann in konstruktiver Abwandlung gegebenenfalls auch direkt an der einen Platte 35 angreifen.

## Patentansprüche

1. Strangpreßkopf
zur Herstellung von Profilen aus verschiedenartigen Kautschuk- und/oder Kunststoffmischungen,
die aus mehreren Extrudern (2,3) ausgepreßt werden, bestehend aus einem fest mit den Zylindern der Extruder (2,3) verbundenen Hauptteil (1) und mindestens einem beweglichen Hauptteil (4) mit einer zwischen ihnen liegenden ebenen oder stumpfwinkligen Teilungsfläche (6), bei dem ein Strömungskanal diese Teilungsfläche (6) durchsetzt und mindestens ein Stück eines anderen Strömungskanales an bzw. in dieser Teilungsfläche (6) liegt,
und aus einer Vorrichtung zur Erzeugung der die Hauptteile (1,4) zusammenpressenden Schließkraft sowie einer Verriegelungsvorrichtung zum Zusammenhalten des bzw. der beweglichen Hauptteile (4) mit dem festen Hauptteil (1), dadurch gekennzeichnet,
daß die Vorrichtung (12) zur Erzeugung der Schließkraft am festen Hauptteil (1) angeordnet ist und eine am beweglichen Hauptteil (4) angreifende Kraftkomponente erzeugt, welche parallel zur Teilungsebene (6) verläuft,
und daß die Verriegelungsvorrichtungen keilförmig gestaltete Klammern (15, 27) sind.

2. Strangpreßkopf nach Anspruch 1,
dadurch gekennzeichnet,
daß hydraulische Servomotoren (12), vorzugsweise Kolben-Zylinder-Einheiten, zur Erzeugung der am beweglichen Hauptteil (4) angreifenden, parallel zur Teilungsebene (6) verlaufenden Kraftkomponenten am festen Hauptteil (1) angeordnet sind.

3. Strangpreßkopf nach Anspruch 1,
dadurch gekennzeichnet,
daß das Gelenk (5) des beweglichen Hauptteiles (4) ausreichend Spiel für eine Verschiebung des beweglichen Hauptteiles (4) entlang der Teilungsfläche (6) aufweist.

4. Strangpreßkopf nach Anspruch 1,
dadurch gekennzeichnet,
daß das bewegliche Hauptteil (4) aus zwei Teilen besteht, die durch parallel zur Teilungsebene verlaufende Führungen miteinander verbunden sind.

5. Strangpreßkopf nach Anspruch 1,
dadurch gekennzeichnet,
daß die keilförmigen Klammern (27) in Führungen (28) verschiebbar sind und an der Außenfläche des beweglichen Hauptteiles (4, 24) angreifen.

6. Strangpreßkopf nach Anspruch 1,
dadurch gekennzeichnet,
daß das feststehende (1) und das bewegliche Hauptteil (4) an den Seiten Vorsprünge (16,17) tragen, die von der keilförmigen Klammer (15) überfaßt werden.

7. Strangpreßkopf nach Anspruch 1,
dadurch gekennzeichnet,
daß die keilförmige Klammer (15) eine im Querschnitt schwalbenschwanzförmige Ausnehmung (22) aufweist und die Vorsprünge (16,17) den Querschnitt von halben Schwalbenschwänzen aufweisen.

8. Strangpreßkopf nach Anspruch 1,
dadurch gekennzeichnet,
daß die Klammer (15) um eine Drehachse (19) verschwenkbar und längs dieser verschiebbar ist.

9. Strangpreßkopf nach Anspruch 1,
dadurch gekennzeichnet,
daß das bewegliche Teil (4) mit einer das Strömungsprofil aufweisenden Einsatzplatte (35) versehen ist, an der die parallel zur Teilungsebene (6) verlaufende Kraftkomponente angreift.

10. Strangpreßkopf nach Anspruch 9,
dadurch gekennzeichnet,
daß an der Einsatzplatte (35) eine Hälfte der Vorprofilleiste befestigt ist.

## Claims

1. An extruder head for the production of sections composed of different types of rubber- and/or plastics mixtures which are extruded from a plurality of extruders (2, 3), comprising a main member (1), which is fixed to the cylinders of the extruders (2, 3), and at least one moveable main member (4), with a flat or obtuse-angled separating surface (6) which extends between the fixed main member (1) and the moveable main member(s) (4), wherein a flow channel passes through this separating surface (6) and at least one portion of another flow channel is located on or in this separating surface (6), and comprising a device which generates the closing force which presses together the main members (1, 4), and a locking device which fixes the moveable main member(s) (4) to the fixed main member (1), characterised in that the device (12) which generates the closing force is arranged on the main member (1) and generates a force component which acts on the moveable main member (4) and extends in parallel to the separating plane (6), and that the locking devices are wedge-shaped clamps (15, 27).

2. An extruder head as claimed in Claim 1, characterised in that hydraulic servomotors (12), preferably piston-cylinder units, which generate the force components which act on the moveable main member (4) and extend in parallel to the separating plane (6), are arranged on the fixed main member (1).

3. An extruder head as claimed in Claim 1, characterised in that the joint (5) of the moveable main member (4) possesses adequate play for the displacement of the moveable main member (4) along the separating surface (6).

4. An extruder head as claimed In Claim 1, characterised In that the moveable main member (4) consists of two parts which are connected to one another by guides extending in parallel to the separating plane.

5. An extruder head as claimed in Claim 1, characterised in that the wedge-shaped clamps (27) are displaceable in guides (28) and act on the outer surface of the moveable main member (4, 24).

6. An extruder head as claimed In Claim 1, characterised in that the fixed main member (1) and the moveable main member (4) are provided with lateral projections (16, 17) over which the wedge-shaped clamp (15) engages.

7. An extruder head as claimed in Claim 1, characterised in that the wedge-shaped clamp (15) comprises a recess (22) which cross-sectionally has the form of a dovetail, and the projections (16, 17) cross-sectionally have the form of half dovetails.

8. An extruder head as claimed in Claim 1, characterised In that the clamp (15) is pivotable about a shaft (19) and is displaceable along the latter.

9. An extruder head as claimed in Claim 1, characterised in that the moveable part (4) is provided with an insert plate (35) which possesses the flow profile and which is acted upon by the force component extending in parallel to the separating plane (6).

10. An extruder head as claimed in Claim 9, characterised in that one half of the preform strip is attached to the insert plate (35).

## Revendications

1. Tête d'extrusion pour la fabrication de profilés réalisés dans des mélanges de caoutchouc et/ou de matière plastique de différents types, qui sont pressés par plusieurs extrudeuses (2, 3), constituée d'une partie principale (1) solidaire des cylindres de l'extrudeuse (2, 3) et d'au moins une partie principale (4) mobile avec une surface de séparation (6) plane ou à angle obtus, située entre celles-ci, dans laquelle un canal d'écoulement traverse cette surface de séparation (6) et une partie au moins d'un autre canal d'écoulement se trouve contre ou dans cette surface de séparation (6), et constituée d'un dispositif destiné à produire la force de fermeture pressant ensemble les parties principales (1, 4), ainsi que d'un dispositif de verrouillage pour maintenir ensemble la ou les parties principales (4) mobiles avec la partie principale fixe (1), caractérisée en ce que le dispositif (12) destiné à produire la force de fermeture, est monté sur la partie principale (1) fixe et produit une composante de force, agissant sur la partie principale (4) mobile, laquelle composante de force est parallèle au plan de séparation (6) et en ce que les dispositifs de verrouillage sont des griffes (15, 27) coniques.

2. Tête d'extrusion selon la revendication 1, caractérisée en ce que des servomoteurs (12) hydrauliques, de préférence des vérins, sont prévus pour produire sur la pièce principale (1) fixe, les composantes de force agissant sur la partie principale (4) mobile et s'étendant parallèlement au plan de séparation (6).

3. Tête d'extrusion selon la revendication 1, caractérisée en ce que l'articulation (5) de la partie principale (4) mobile présente un jeu suffisant pour un déplacement de la partie principale (4) mobile, le long de la surface de séparation (6).

4. Tête d'extrusion selon la revendication 1, caractérisée en ce que la partie principale (4) mobile est constituée de deux pièces qui sont assemblées entre elles par des dispositifs de guidage s'étendant parallèlement au plan de séparation.

5. Tête d'extrusion selon la revendication 1, caractérisée en ce que les griffes (27) coniques peuvent coulisser dans des dispositifs de guidage (28) et agissent sur la surface extérieure de la partie principale (4, 24) mobile.

6. Tête d'extrusion selon la revendication 1, caractérisée en ce que la partie principale fixe (1) et la partie principale mobile (4) portent, sur les côtés, des parties saillantes (16, 17) sur lesquelles passe la griffe (15) conique.

7. Tête d'extrusion selon la revendication 1, caractérisée en ce que la griffe (15) conique présente un évidement (22) de section transversale en queue d'aronde et les parties saillantes (16, 17) ont une section transversale en demi-queue d'aronde.

8. Tête d'extrusion selon la revendication 1, caractérisée en ce que la griffe (15) peut pivoter autour d'un axe de rotation (19) et peut coulisser le long de celui-ci.

9. Tête d'extrusion selon la revendication 1, caractérisée en ce que la partie mobile (4) est pourvue d'une plaque rapportée (35), présentant le profil d'écoulement et sur laquelle agit la composante de force s'étendant parallèlement au plan de séparation (6).

10. Tête d'extrusion selon la revendication 9, caractérisée en ce qu'une moitié de l'avant-profilé est fixée sur la plaque rapportée (35).
